# FASCICULE DE BREVET EUROPEEN

(11) **EP 4 343 568 B1**
(45) Date de publication et mention de la délivrance du brevet: **28.10.2026**
(21) Numéro de dépôt: 23198660.5
(22) Date de dépôt: 20.09.2023
(51) Int. Cl.: G06F 16/21

(54) **ENTITÉ POUR METTRE EN OEUVRE UN SERVICE DANS UN RÉSEAU, DISPOSITIF APPLICATIF, ET PROCÉDÉ D'ÉXECUTION D'UNE OPÉRATION D'UN SERVICE**
EINHEIT ZUR IMPLEMENTIERUNG EINES DIENSTES IN EINEM NETZWERK, ANWENDUNGSVORRICHTUNG UND VERFAHREN ZUR DURCHFÜHRUNG EINES DIENSTVORGANGS
AN ENTITY FOR IMPLEMENTING A SERVICE IN A NETWORK, AN APPLICATION DEVICE, AND A METHOD FOR PERFORMING AN OPERATION OF A SERVICE

(30) Priorité: 26.09.2022 FR 2209720
(43) Date de publication de la demande: 27.03.2024
(73) Titulaire: Orange, 92130 Issy-les-Moulineaux (FR)
(72) Inventeur: TREFCON, Michel, 92326 Chatillon (FR); ANSIAUX, Alexandra, 92326 Chatillon (FR)

(56) Documents cités:
- US-A1- 2016 127 465

## Description

### Technique antérieure

L'invention appartient au domaine général des télécommunications.

Elle concerne plus particulièrement une architecture permettant d'optimiser le fonctionnement et les performances d'un service qui s'appuie, lorsqu'il est appelé, sur des données gérées par un autre service.

L'invention a une application privilégiée mais non limitative dans le contexte d'un réseau cœur 5G (ou de 5^{ème} Génération) tel que défini par le standard 3GPP (ou « Third Generation Partnership Project » en anglais). Un tel réseau cœur 5G est composé de façon connue en soi de multiples fonctions réseau (NF ou « Network Functions » en anglais), chaque fonction NF ayant un rôle et une logique propre. Des exemples de telles fonctions NF sont par exemple une fonction réseau de gestion de l'accès et de la mobilité ou AMF (pour « Access and Mobility Management Function » en anglais), une fonction réseau de gestion de session ou SMF (pour « Session Management Function » en anglais), une fonction réseau de sélection de tranche réseau ou NSSF (pour « Network Slice Selection Function » en anglais), une fonction réseau de contrôle des politiques ou PCF (pour « Policy Control Function » en anglais), etc. La gestion de ces fonctions réseau est assurée dans le réseau cœur 5G par une autre fonction réseau, appelée catalogue de fonctions réseau ou NRF (ou « Network function Repository Function » en anglais). Cette fonction NRF est chargée de fournir à une fonction réseau cliente ou consommatrice de services (ou « consumer » en anglais) les informations lui permettant d'interagir, directement ou indirectement via un équipement intermédiaire (ou SCP pour « Service Communication Proxy » en anglais), avec une fonction réseau fournisseuse de services (ou « producer » en anglais).

Chaque fonction NF du réseau cœur 5G fournit classiquement une pluralité de services à d'autres fonctions du réseau cœur autorisées à y accéder, chaque service ayant lui-même un rôle et une logique qui lui sont propres, et pouvant comporter une ou plusieurs ressources (par exemple des ressources REST pour « REpresentational State Transfer » en anglais). Ainsi, par exemple, la fonction réseau NRF est composée, comme décrit notamment dans les documents 3GPP TS 23.502 intitulé « Technical Specification Group Services and System Aspects; Procedures for the 5G System (5GS); Stage 2; (Release 17) », v17.5.0, juin 2022, et TS 29.510 intitulé « « Technical Specification Group Core Network and Terminals; 5G System; Network Function Repository Services; Stage 3 (Release 17) », v17.6.0, juin 2022, de quatre services :
- un service de gestion Nnrf_NFManagement : ce service permet à une fonction NF « producer » (ou une instance d'une telle fonction réseau) d'enregistrer, de mettre à jour et de désenregistrer son profil auprès de la fonction NRF. Le profil (ou « NFProfile ») d'une fonction NF comprend une pluralité d'attributs caractérisant l'état opérationnel de la fonction NF (ex. sa disponibilité, sa charge, depuis quand elle a démarré, etc.), ses caractéristiques (ex. son identifiant, son nom de domaine pleinement qualifié ou FQDN (pour « Fully Qualified Domain Name » en anglais)), le type de fonction NF, comment elle peut être jointe, etc.), les services qu'elle offre, les ressources qu'elle gère, etc. Des attributs peuvent être définis plus spécifiquement au niveau de chaque service implémenté par la fonction NF (sinon ce sont ceux définis au niveau de la fonction NF qui s'appliquent) ;
- un service de découverte Nnrf_NFDiscovery : ce service permet à une fonction NF « consumer » d'obtenir une liste de profils de fonctions NF « producer » selon de multiples critères de recherche, qui peuvent être liés notamment à la logique de la fonction NF « consumer » et à un contexte d'exécution en cours ;
- un service d'autorisation Nnrf_AccessToken qui s'appuie sur le protocole de délégation d'autorisation OAuth2 ;
- un service d'amorçage Nnrf_Boostrapping qui permet à une fonction NF de connaître les points d'accès aux services offerts par la fonction NRF.

Ainsi, toute fonction NF « consumer » souhaitant consommer le service d'une fonction NF « producer » doit au préalable interroger le service de découverte Nnrf_NFDisco-very de la fonction NRF (en invoquant l'opération *SearchNFInstances*) en fonction de sa logique métier et de son contexte d'exécution, afin d'obtenir une liste de profils de fonctions NF candidates, gérés par le service de gestion Nnrf_NFManagement, correspondant à ce contexte d'exécution. Puis, à partir de la liste de fonctions NF candidates obtenue, la fonction NF « consumer » identifie la fonction NF candidate la plus à même de lui fournir le service souhaité et envoie une requête HTTP (pour « HyperText Transfer Protocol ») au service idoine de cette dernière.

Le réseau cœur 5G, par ses spécifications, est particulièrement bien adapté aux environnements de type « nuages informatiques » (aussi plus communément connus sous l'appellation de « clouds » en anglais). Dans un tel environnement, les fonctions NF du réseau cœur 5G peuvent être conçues selon une architecture logicielle de micro-services (aussi parfois désignée dans la suite par « architecture micro-service » par souci de simplification).

En effet, de façon connue en soi, une telle architecture est couramment utilisée dans le domaine du développement des applications logicielles. Elle consiste à décomposer une application pour en isoler les fonctions principales qui peuvent s'exécuter indépendamment les unes des autres. Ces fonctions principales, désignées par « services » ou « micro-services », peuvent alors avantageusement être développées et déployées séparément, bien que fonctionnant en synergie. Elles peuvent être hébergées par un même dispositif applicatif ou par des dispositifs applicatifs distincts. La responsabilité et le nombre de micro-services dépendent des choix du concepteur de l'application. Dans l'exemple de la fonction NRF évoquée précédemment, on peut notamment envisager un micro-service pour chaque service Nnrf_NFManagement, Nnrf_NFDiscovery, Nnrf_AccessToken et Nnrf_Boostrapping, implémenté par la fonction NRF.

L'avantage d'une architecture micro-service par rapport à une architecture monolithique classique selon laquelle tous les composants forment une entité indissociable, est que chaque micro-service peut fonctionner (ou dysfonctionner) sans affecter les autres, ce qui facilite la structuration et les interventions des équipes de développement et de maintenance/mise à jour de l'application.

Ainsi, les architectures de micro-services, en raison de la flexibilité de chaque micro-service, s'intègrent de façon privilégiée (mais non limitative) dans les environnements « cloud » connus pour leur agilité et offrant des ressources partagées évolutives. La coordination et la supervision des micro-services sont assurées en temps réel par un orchestrateur, qui surveille notamment la charge de chaque instance de micro-service (aussi communément désignée par « pod » en anglais). Lorsque la charge des pods relatifs à un micro-service dépasse un seuil donné, l'orchestrateur instancie un nouveau pod dans le but de répondre à l'accroissement de la charge. Inversement, l'orchestrateur supprime un pod lorsqu'il estime que la charge courante répartie sur tous les pods descend en dessous d'un certain seuil. Cela permet de réduire la consommation de ressources (ex. CPU (pour « Central Processing Unit » en anglais), mémoire, énergie, etc.). Ce mécanisme dynamique de création et de suppression de pods est aussi connu sous le nom de scalabilité ou élasticité horizontale.

Bien que conçus pour pouvoir s'exécuter indépendamment les uns des autres, il se peut que les micro-services aient besoin conformément à la logique de traitement qu'ils implémentent d'accéder à des données gérées dynamiquement par d'autres micro-services et susceptibles d'évoluer dans le temps. Typiquement dans l'exemple de la fonction NRF évoquée précédemment dans lequel les services Nnrf_NFManagement et Nnrf_NFDiscovery sont implémentés par deux micro-services distincts, le micro-service Nnrf_NFDiscovery a besoin, pour répondre à une fonction NF « consumer », d'accéder à la liste des profils des fonctions NF « producer » enregistrés auprès du micro-service Nnrf_NFManagement, ces profils pouvant faire l'objet de mises à jour dans le temps (ex. création d'un profil, modification d'attributs d'un profil, passage de la fonction NF d'un état enregistré à un état suspendu, ou suppression d'un profil). Dans le contexte d'un réseau cœur 5G, il est important d'optimiser en termes de conception et d'exploitation cet accès, notamment en vue de réduire les temps de traitement mis en œuvre par chaque micro-service qui représentent un facteur clé pour l'opérateur du réseau en raison de leur impact direct sur la consommation des ressources et incidemment, sur le coût de fonctionnement de l'infrastructure sous-jacente déployée par l'opérateur.
Le brevet US 2016/127465 A1 décrit une solution centralisée qui permet une synchronisation automatique et continue entre des données gérées par plusieurs services tiers externes afin de résoudre des conflits de données.

### Exposé de l'invention

L'invention est définie par les revendications indépendantes. D'autres modes de réalisations de l'invention sont définis par les revendications dépendantes.

Par dispositif applicatif, on entend ici tout type de dispositif communicant, matériel ou virtuel (i.e. logiciel), configuré pour mettre en œuvre une logique de traitement déterminée, comme par exemple un dispositif offrant et/ou consommant des services dans un réseau telle qu'une fonction réseau ou une instance de fonction réseau d'un réseau cœur. Ainsi, le premier dispositif applicatif au sens de l'invention peut être notamment une fonction réseau NRF (ou un dispositif matériel hébergeant une telle fonction réseau) d'un réseau cœur mettant en œuvre plus particulièrement des services Nnrf_NFManagement (deuxième service au sens de l'invention) et Nnrf_NFDiscovery (premier service au sens de l'invention) tels que définis par le standard 3GPP, lesdits services étant accessibles via des interfaces de programmation applicatives (ou API pour « Application Programming Interface » en anglais). Il convient toutefois de noter que l'invention ne se limite pas à des premier et deuxième services implémentés par un même dispositif applicatif et/ou par un même équipement matériel.

Par « données gérées par le deuxième service », on entend des données administrées par le deuxième service, c'est-à-dire que le deuxième service est en mesure d'obtenir et éventuellement de modifier, de stocker, typiquement dans une structure mémoire organisée, fiable et persistante (autrement dit sur le long terme, pendant une durée qui peut ne pas être bornée), et de manipuler (par exemple de façon rapide et sélective). Une telle structure mémoire est par exemple une base de données stockée dans une couche de persistance.

Dans un mode particulier de réalisation, les données en question sont relatives à au moins un deuxième dispositif applicatif du réseau.

Ledit au moins un deuxième dispositif applicatif désigne par exemple au moins une fonction NF « producer » (ou un dispositif matériel hébergeant une telle fonction réseau) du réseau cœur. Ainsi à titre illustratif, lorsque le deuxième service est le service Nnrf_NFManagement d'une fonction NRF telle que définie par le standard 3GPP, les données gérées par ce service comprennent des profils de fonctions NF du réseau, gérés et maintenus à jour par la fonction NRF par exemple dans une couche de persistance, que la fonction NRF a obtenus par le biais d'une procédure d'enregistrement exécutée par les fonctions NF.

L'invention propose ainsi avantageusement une architecture selon laquelle chaque entité implémentant un service distinct d'un dispositif applicatif (premier dispositif applicatif au sens de l'invention) s'appuie sur une structure mémoire qui lui est propre. Une telle structure mémoire est par exemple, pour le deuxième service qui gère les données en question, une couche de persistance propre au deuxième service, accessible par d'autres services (et plus particulièrement par le premier service) uniquement via le deuxième service par l'intermédiaire d'une interface de programmation du deuxième service ; la structure mémoire du premier service, qui a besoin d'accéder à ces données sans pour autant être responsable de leur gestion, est quant à lui un cache dit primaire (aussi qualifié de « backend » en anglais) local de l'entité implémentant le premier service. La réplique des données gérées par le deuxième service (ou tout du moins, de la partie d'entre elles qui sont susceptibles d'être exploitées par le premier service) dans un cache local de cette entité, c'est-à-dire au plus proche du premier service, permet d'assurer un accès rapide par le premier service (et notamment par son module de traitement) aux données dont il a besoin le cas échéant pour exécuter les opérations du premier service. Cet accès rapide garantit une rapidité d'exécution du premier service par le premier dispositif applicatif, et permet d'améliorer la latence du réseau.

En outre, les mises à jour effectuées par le module de mise à jour de l'entité implémentant le premier service permettent avantageusement de garantir une synchronisation entre les données gérées par le deuxième service et les répliques de ces données mémorisées dans le cache primaire, ce qui assure une fiabilité de l'exécution du premier service par le premier dispositif applicatif.

Par ailleurs, le fait que le module de traitement exploite les données mémorisées dans son cache primaire pour exécuter les opérations qui lui sont confiées permet non seulement un gain de temps, mais également de maintenir le module de traitement opérationnel y compris lorsque le deuxième service est défaillant (par exemple, en raison d'une indisponibilité temporaire de sa couche de persistance), dès lors que cette défaillance est de courte durée. En effet, une défaillance de courte durée se traduit généralement par un faible décalage entre les données gérées par le deuxième service et les données mémorisées dans le cache primaire exploitées par le premier service. Ainsi grâce à l'invention, une dégradation de la qualité du premier service est évitée nonobstant la défaillance du deuxième service.

En outre, dès que le deuxième service cesse d'être défaillant, sous réserve que la persistance de la couche mémoire du deuxième service n'ait pas été modifiée, le module de mise à jour de l'entité implémentant le premier service est en mesure de resynchro-niser automatiquement les données mémorisées dans le cache primaire avec les données gérées par le deuxième service. L'invention améliore donc la stabilité du réseau.

Il convient de noter que ce comportement avantageux ne serait pas possible si de façon alternative, au lieu d'implémenter deux couches mémoires distinctes comme dans l'invention, on envisageait le partage d'une même couche de persistance (ex. même base de données) entre les premier et deuxième services, ou si le module de traitement était configuré pour, à chaque exécution d'une opération lui étant confiée, interroger la couche de persistance du deuxième service pour obtenir les données dont il a besoin plutôt que de consulter le cache primaire de l'entité implémentant le premier service.

L'utilisation d'une structure mémoire distincte pour chacun des services implémentés par le premier dispositif permet en outre d'envisager des logiques de persistance et d'accès distinctes pour ces structures mémoires, répondant individuellement aux besoins et aux contraintes de chacun des services auxquels elles sont rattachées. Typiquement, dans l'exemple de la fonction NRF envisagé précédemment, les logiques de persistance des profils de fonctions NF mémorisés par les services Nnrf_NFManagement et Nnrf_NFDiscovery et d'accès à ces profils peuvent être conçues de façon différente, notamment si l'on s'appuie sur les API définies par le standard 3GPP selon lesquelles les profils de fonctions NF gérés par le service Nnrf_NFManagement sont accessibles via l'opération GetNFInstances en spécifiant deux paramètres d'entrée (identifiant du profil de la fonction NF(*nfInstanceID*) et type de la fonction NF (*nfType*))*,* tandis que les requêtes formulées auprès du service Nnrf_NFDiscovery au moyen de l'opération SearchNFInstances peuvent comporter un nombre bien supérieur de paramètres d'entrée (jusqu'à plusieurs dizaines), et ce afin notamment de minimiser les temps de traitement pour chaque service. De façon similaire, la structure mémoire du service Nnrf_NFManagement dans laquelle sont mémorisés les profils des fonctions NF gérés par ce service est naturellement persistante ; le cache du service Nnrf_NFDiscovery peut au contraire ne pas être persistant mais présente une grande rapidité d'exécution.

L'invention se caractérise donc par une absence d'adhérence et un faible couplage entre les premier et deuxième services implémentés dans le réseau. L'absence d'adhérence et le faible couplage combinés à l'utilisation d'une API permet aux deux services d'interagir entre eux pour mettre en œuvre les fonctionnalités dont le premier dispositif applicatif a la charge dans le réseau, y compris lorsque des acteurs distincts ont développé les deux services en question (qu'ils soient ou non implémentés tous les deux par le premier dispositif applicatif), ou lorsque la couche de persistance du deuxième service change. Ceci offre une grande flexibilité d'utilisation de l'invention.

En outre, l'invention permet avantageusement d'exploiter des API déjà existantes, par exemple des API standardisées permettant d'interagir avec le deuxième service. Typiquement, dans le contexte de la fonction NRF évoquée précédemment, l'invention permet d'alimenter le cache primaire et de le maintenir à jour par rapport aux profils de fonctions NF maintenus par le service Nnrf_NFManagement en utilisant l'API du service Nnrf_NFManagement définie par le standard 3GPP.

Le modèle d'architecture proposé par l'invention apparaît par conséquent relativement en phase avec la logique d'indépendance des micro-services. Il permet d'éviter le recours à une couche de persistance partagée par les deux services, peu cohérente avec cette logique d'indépendance. L'invention a de ce fait une application privilégiée mais non limitative dans un contexte où les services d'un réseau de communications (et en particulier le premier et le deuxième service) sont conçus sous la forme de micro-services distincts.

Comme évoqué précédemment, une telle architecture micro-service est particulièrement bien adaptée pour implémenter les fonctions réseau (NF) d'un réseau cœur et notamment les fonctions NF d'un réseau cœur 5G tel que défini par le standard 3GPP. Il convient de noter qu'une conception de plus en plus désagrégée des fonctions NF du réseau cœur est envisagée aujourd'hui, typiquement par opération de service, conduisant à de multiples micro-services susceptibles de vouloir accéder de façon concomitante aux mêmes données. Dans ce contexte, le recours à une couche de persistance partagée (ex. une base de données partagée stockée dans une couche de persistance) crée des problèmes de concurrence et de conflits d'accès à la couche de persistance qui peuvent s'avérer très limitants, ces problèmes se présentant avec une forte occurrence, et induire une grande complexité de la couche de persistance partagée. L'invention, au contraire, est particulièrement bien adaptée à une telle évolution.

Comme évoqué précédemment, les données gérées par le deuxième service peuvent être notamment des données relatives à au moins un deuxième dispositif applicatif du réseau. Dans un mode particulier de réalisation, au moins une dite opération exécutée par le module de traitement de l'entité selon l'invention comprend la réception d'une requête d'un troisième dispositif applicatif du réseau relative à au moins un dit deuxième dispositif applicatif et la fourniture en réponse à ladite requête de données relatives audit au moins un deuxième dispositif applicatif extraites du cache primaire.

**Ainsi,** l'invention s'applique de façon privilégiée, mais non limitative, dans le contexte du service Nnrf_NFDiscovery exécuté par la fonction NRF d'un réseau cœur 5G. L'invention peut toutefois s'appliquer à d'autres services, dès lors qu'il convient de gérer un accès concurrent à des données par plusieurs services.

Par exemple, toujours dans le contexte d'un réseau cœur 5G, on peut envisager d'appliquer l'invention à la fonction UDSF (pour « Unstructured Data Storage Function » en anglais) (premier dispositif applicatif au sens de l'invention), décrite notamment dans le document 3GPP TS 29.598 intitulé « Technical Specification Group Core Network and Terminals; 5G System; Unstructured Data Storage Services; Stage 3 (Release 17) », v17.6.0, juin 2022. Cette fonction UDSF du réseau cœur conserve des données dites « non structurées » (par exemple des données de contexte d'une session en cours ou d'un équipement utilisateur). Ces données peuvent être déposées et modifiées auprès de la fonction UDSF via une API par tout type de fonctions NF. A cet effet, pour une ressource par exemple de type « Record » identifiée par son URI (pour « Uniform Resource Identifier » en anglais), une fonction NF peut utiliser les opérations CreateorModifyRecord de création et de mise à jour et DeleteRecord de suppression d'une ressource fournies par le service Nudsf_DataRepository de la fonction UDSF. Il est par ailleurs possible à une fonction NF d'accéder à un ensemble de ressources de type « Record » stockées par la fonction UDSF au moyen de l'opération SearchRecord du service Nudsf_DataRepository.

Le standard 3GPP définit aujourd'hui un unique service Nudsf_DataRepository fournissant les opérations CreateorModifyRecord, Delete et SearchRecord. Toutefois, de façon similaire à ce qui est envisagé pour la fonction NRF, on pourrait envisager que les opérations CreateorModifyRecord et Delete d'une part, et l'opération SearchRecord d'autre part, soient fournies par des services distincts, chaque service pouvant être implémenté au moyen d'un micro-service. L'invention permet alors avantageusement, pour une telle implémentation, de gérer un accès concurrent par l'opération SearchRecord (premier service au sens de l'invention) aux données créées et/ou modifiées par les opérations CreateorModifyRecord et DeleteRecord (associées à un deuxième service au sens de l'invention).

Dans un autre contexte, on peut envisager d'appliquer l'invention à des données relatives à des contribuables, gérées par un service de gestion informatique (deuxième service au sens de l'invention) du ministère des finances chargé d'assurer la création, la modification, la mise à jour de ces données, et à un service (premier service au sens de l'invention) amené à sélectionner pour des raisons diverses (ex. élaboration de statistiques, calcul prévisionnel de l'impôt de façon macroscopique, etc.) des ensembles de ces contribuables sur la base de critères particuliers.

Dans un mode particulier de réalisation, le module de traitement de l'entité selon l'invention est configuré pour mémoriser dans un cache dit secondaire (aussi qualifié de « frontend » en anglais) de l'entité lesdites données fournies en réponse à la requête du troisième dispositif applicatif et pour fournir en réponse à une requête ultérieure similaire ou identique, tout ou partie desdites données mémorisées dans le cache secondaire.

Ce mode de réalisation permet d'accélérer le temps de traitement de la requête du troisième dispositif applicatif, puisqu'elle permet de réexploiter en l'état une réponse faite précédemment à une requête similaire, sans avoir besoin d'interroger le cache primaire et d'élaborer une telle réponse à partir des données obtenues du cache primaire.

Il convient de noter qu'il est possible d'associer à chaque réponse stockée dans le cache secondaire une durée de vie afin d'éviter de renvoyer au troisième dispositif applicatif une réponse obsolète.

En outre, pour améliorer encore davantage les performances de l'entité implémentant le premier service et notamment sa rapidité d'exécution du premier service, le module de traitement peut être configuré pour, à chaque nouvelle requête reçue d'un dit troisième dispositif applicatif, vérifier si une requête précédente similaire ou identique a déjà été traitée et exploiter le cas échéant la réponse contenue dans le cache secondaire pour cette requête précédente si tant est que cette réponse est toujours valide.

Dans un mode particulier de réalisation, l'entité selon l'invention est configurée pour fournir avec lesdites données relatives audit au moins un deuxième dispositif applicatif un niveau de priorité attribué audit au moins un deuxième dispositif applicatif et/ou une durée de validité desdites données déterminé(e)(s) en fonction d'une fréquence de mise à jour des données relatives audit au moins un deuxième dispositif applicatif déterminée par le module de mise à jour.

Le module de mise à jour de l'entité a en effet avantageusement accès à la fréquence de mise à jour des données relatives aux deuxièmes dispositifs applicatifs. On peut envisager d'exploiter cette information pour déterminer, pour chaque deuxième dispositif applicatif, une durée de validité des données qui lui sont rattachées, et incidemment, lorsque ces données sont fournies à un troisième dispositif en réponse à une requête de ce dernier, une durée de validité de cette réponse. Il convient de noter que le standard 3GPP définit un paramètre de durée de validité (nommé *validityPeriod*) de la réponse du service Nnrf_NFDiscovery, qui s'applique à l'ensemble de la réponse, autrement dit à tous les profils de fonctions NF contenus dans la réponse. Une telle information est également présente dans l'entête Cache-Control de la réponse (entête http standard, connu en soi). L'invention permet dans ce mode de réalisation d'améliorer la granularité du paramètre *validityPeriod* et de l'information contenue dans l'entête de la réponse en attribuant une durée de validité distincte à chaque profil de fonction NF (ou plus généralement aux données relatives à chaque deuxième dispositif applicatif connu du premier service). Typiquement, plus la fréquence de mise à jour des données relatives à un deuxième dispositif applicatif est grande, plus la durée de validité de ces données est faible.

La fréquence de mise à jour peut en outre être exploitée par le premier service pour attribuer un niveau de priorité à chacun des deuxièmes dispositifs applicatifs. Notamment, comme évoqué ci-avant, lorsque la fréquence de mise à jour des données relatives à un deuxième dispositif applicatif est grande, la durée de validité de ces données est faible. Ainsi, pour deux dispositifs applicatifs implémentant les mêmes fonctionnalités (par exemple une même fonction réseau), il peut être pertinent d'attribuer un niveau de priorité plus important à celui dont les données ont une durée de validité plus grande. Bien entendu, d'autres facteurs que la fréquence de mise à jour des données peuvent être pris en compte pour déterminer un tel niveau de priorité, comme notamment le changement d'état du dispositif applicatif considéré (ex. passage d'un état enregistré à un état suspendu).

Dans un mode particulier de réalisation, le module de gestion est configuré pour souscrire auprès du deuxième service, via ladite interface de programmation, à une notification du module de mise à jour des modifications affectant desdites données gérées par le deuxième service relatives à au moins un dit deuxième dispositif applicatif.

Lorsque ladite souscription auprès du deuxième service est réalisée pour une durée limitée, le module de gestion peut en outre être configuré pour prolonger ladite durée limitée afin de maintenir active ladite souscription.

L'invention permet ainsi au module de mise à jour d'être notifié de façon automatique et sans délai en cas de modification des données gérées par le deuxième service, et d'assurer ainsi une parfaite synchronisation des données mémorisées dans le cache primaire avec les données disponibles au niveau du deuxième service. Cela permet en outre d'éviter l'envoi de requêtes régulières par le premier service au deuxième service aux fins d'une telle synchronisation.

Dans un mode particulier de réalisation, ledit au moins un deuxième dispositif applicatif héberge une fonction réseau et lesdites données gérées par le deuxième service relatives à un dit deuxième dispositif applicatif comprennent des attributs d'un profil de ce deuxième dispositif applicatif.

Comme évoqué précédemment, l'invention a effectivement une application privilégiée mais non limitative lorsque le premier dispositif applicatif implémente le premier et le deuxième service et est une fonction NRF d'un réseau cœur tel que défini par le standard 3GPP.

Dans ce mode particulier de réalisation, le module de mise à jour peut en outre être configuré pour, suite à une réception en provenance du deuxième service d'une notification comprenant au moins un attribut d'un profil d'un dit deuxième dispositif applicatif ayant été modifié, mettre à jour le cache primaire avec ledit au moins un attribut modifié du profil contenu dans la notification.

De façon alternative, le module de mise à jour peut être configuré pour, suite à une réception en provenance du deuxième service d'une notification comprenant au moins une opération de transformation reflétant une modification d'au moins un attribut d'un profil d'un dit deuxième dispositif applicatif géré par le deuxième service, appliquer ladite au moins une opération de transformation audit au moins un attribut correspondant mémorisé dans le cache primaire pour le mettre à jour.

Par ailleurs, dans ce mode particulier de réalisation, le module de gestion peut en outre être configuré pour, via ladite interface de programmation :
- interroger le deuxième service pour obtenir une liste d'identifiants de profils gérés par le deuxième service ;
- envoyer une requête pour chaque identifiant de ladite liste pour obtenir le profil correspondant géré par le deuxième service ; et
- mémoriser les profils obtenus dans le cache primaire.

L'invention peut ainsi être aisément mise en œuvre en exploitant des API standardisées, telles que définies par le standard 3GPP notamment pour la fonction NRF. Ceci permet de simplifier la mise en œuvre de l'invention et d'éviter la définition de nouvelles interfaces entre le premier et le deuxième service.

Dans un mode particulier de réalisation, le module de gestion est configuré pour déclencher une vérification d'une concordance entre les données gérées par le deuxième service et les données présentes dans le cache primaire à un instant donné.

Cette vérification apporte une garantie supplémentaire que le contenu du cache primaire est bien synchronisé avec le contenu de la couche de persistance du deuxième dispositif. Elle peut être exécutée de façon ponctuelle par le module de gestion lui-même ou par un module d'audit externe mandaté par le module de gestion, au moyen de mécanismes de synchronisation de structures de données (telles que des bases de données) connus de l'homme du métier.

Dans un mode particulier de réalisation, le procédé d'exécution est mis en œuvre par un ordinateur.

L'invention vise également un programme d'ordinateur sur un support d'enregistrement, ce programme étant susceptible d'être mis en œuvre dans un ordinateur ou plus généralement dans une entité conforme à l'invention et comporte des instructions adaptées à la mise en œuvre d'un procédé d'exécution tel que décrit ci-dessus.

Le programme précité peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'information ou d'enregistrement peut être un circuit intégré dans lequel un programme est incorporé, le circuit étant adapté pour exécuter ou pour être utilisé dans l'exécution du procédé d'exécution selon l'invention.

Selon un autre aspect, l'invention vise également un dispositif applicatif d'un réseau de communications, dit premier dispositif applicatif, comprenant :
- une première entité conforme à l'invention, configurée pour mettre en œuvre un premier service ; et
- une deuxième entité configurée pour mettre en œuvre le deuxième service gérant des données relatives audit au moins un deuxième dispositif applicatif du réseau.

Dans un mode particulier de réalisation, lesdites données gérées par le deuxième service sont mémorisées dans une couche de persistance du deuxième service accessible via ladite interface de programmation.

En outre, dans un mode particulier de réalisation, le dispositif selon l'invention a une architecture de micro-services, la première entité et la deuxième entité correspondant à des micro-services distincts dudit dispositif.

Le premier dispositif applicatif selon l'invention bénéficie des mêmes avantages cités précédemment que l'entité configurée pour mettre en œuvre un premier service et le procédé d'exécution d'au moins une opération d'un service selon l'invention.

Selon un autre aspect encore, l'invention vise un système d'un réseau de communication comprenant :
- au moins un premier dispositif applicatif du réseau selon l'invention implémentant un premier service et un deuxième service ;
- au moins un deuxième dispositif applicatif du réseau configuré pour enregistrer des données le concernant auprès du deuxième service du premier dispositif applicatif ; et
- au moins un troisième dispositif applicatif du réseau configuré pour envoyer au premier service du premier dispositif applicatif une requête relative à au moins un dit deuxième dispositif applicatif.

Dans un mode particulier de réalisation, lesdits au moins un premier, deuxième et troisième dispositif applicatif hébergent des fonctions réseau, la fonction réseau hébergée par le premier dispositif applicatif gérant des profils desdits deuxièmes dispositifs applicatifs.

Le système selon l'invention bénéficie des mêmes avantages cités précédemment que l'entité configurée pour mettre en œuvre un premier service, le premier dispositif applicatif et le procédé d'exécution d'au moins une opération d'un service selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente, dans son environnement, un système dans un réseau conforme à l'invention, dans un mode particulier de réalisation ;
[Fig. 2] la figure 2 représente schématiquement l'architecture matérielle d'un ordinateur pouvant héberger un dispositif applicatif selon l'invention ;
[Fig. 3] la figure 3 représente les modules fonctionnels d'une entité du système de la figure 1, conforme à l'invention et configurée pour mettre en œuvre un premier service ;
[Fig. 4] la figure 4 représente les relations entre les dispositifs applicatifs du système de la figure 1 et les principales étapes d'un procédé d'exécution selon l'invention, tel qu'il est mis en œuvre par l'entité représentée à la figure 3, dans un mode particulier de réalisation.

### Description de l'invention

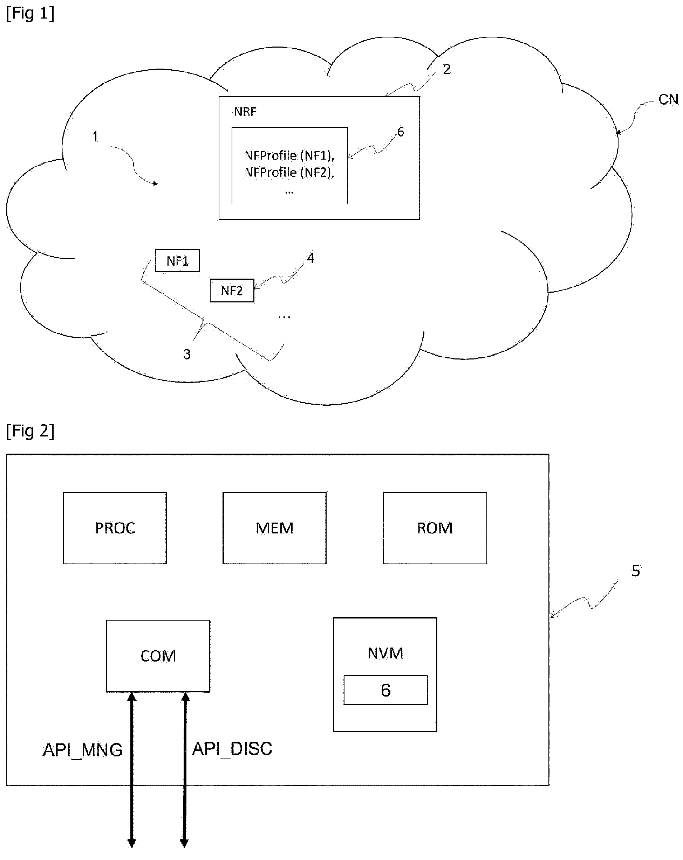

La **figure 1** représente, dans son environnement, un système 1 d'un réseau CN de communication, conforme à l'invention, dans un mode particulier de réalisation.

Dans le mode de réalisation décrit ici, le réseau CN est un réseau cœur 5G ou 5GC (pour « 5G Core network » en anglais), tel que défini par le standard 3GPP.

Conformément à l'invention, le système 1 comprend :
- au moins un premier dispositif applicatif 2 du réseau cœur CN, conforme à l'invention, implémentant une pluralité de services. Dans l'exemple envisagé ici, le premier dispositif applicatif 2 héberge une fonction réseau de type NRF qui, conformément à ce qui est décrit dans les documents 3GPP TS 23.502 et TS 29.510 et comme rappelé précédemment, implémentent quatre services, à savoir un service de gestion Nnrf_NFManagement (deuxième service au sens de l'invention), un service de découverte Nnrf_NFDiscovery (premier service au sens de l'invention), un service d'autorisation Nnrf_AccessToken, et un service d'amorçage Nnrf_Boostrapping ;
- au moins un deuxième dispositif applicatif du réseau cœur CN (aussi désigné par dispositif « producer »), référencé de façon générale sur la figure 1 par 3, et configuré pour enregistrer des données le concernant (et plus particulièrement son profil NFProfile, comme détaillé davantage ultérieurement) auprès du premier dispositif applicatif 2. Dans l'exemple envisagé à la figure 1, ledit au moins un deuxième dispositif applicatif 3 comprend une pluralité de dispositifs hébergeant des fonctions réseau (ou fonctions NF) référencées par NF1, NF2, ... Aucune limitation n'est attachée à la nature de ces fonctions réseau NF1, NF2, ... Il peut s'agir de fonctions réseau AMF, SMF, NSSF, PCF, etc. ; et
- au moins un troisième dispositif applicatif 4 du réseau cœur CN (aussi désigné par dispositif « consumer »), configuré pour envoyer au premier dispositif applicatif 2 une requête relative à au moins un dit deuxième dispositif applicatif 3 du réseau. Dans l'exemple envisagé ici, ledit au moins un troisième dispositif applicatif 4 est typiquement l'un des dispositifs applicatifs 3, autrement dit, un dispositif hébergeant une fonction réseau du réseau cœur CN, souhaitant consommer les services d'une autre fonction réseau du réseau cœur CN hébergée par l'un des dispositifs applicatifs 3. Ainsi, on comprend bien dans l'exemple envisagé ici, qu'un dispositif hébergeant une fonction réseau NF peut à la fois être un dispositif « producer » s'enregistrant auprès du dispositif NRF 2, et un dispositif « consumer » sollicitant le dispositif NRF 2 pour obtenir des informations sur un dispositif « producer ».

Comme évoqué précédemment, la notion de « dispositif applicatif » désigne aussi bien ici un dispositif matériel qu'un dispositif logiciel ou virtuel. Ainsi l'invention s'applique indifféremment à des dispositifs applicatifs logiciels ou virtuels et à des dispositif applicatifs matériels hébergeant des fonctions réseau. Lorsque les dispositifs applicatifs considérés sont des dispositifs matériels (par exemple des serveurs d'une infrastructure du réseau cœur CN), ils ont alors l'architecture matérielle d'un ordinateur 5, tel qu'illustrée à la **figure 2****.** Cette architecture matérielle s'appuie sur un processeur PROC, une mémoire vive MEM, une mémoire morte ROM, une mémoire non volatile NVM, et des moyens COM de communications avec d'autres entités, par exemple, d'autres entités du réseau cœur CN. Ces moyens COM de communication peuvent notamment s'appuyer sur une interface de communication filaire ou sans fil, connue en soi et non décrite plus en détail ici, mais également sur une ou plusieurs interfaces logicielles et notamment ici sur une interface de programmation applicative (API) utilisant le protocole HTTP/2 comme détaillé davantage ultérieurement. Lorsque les dispositifs applicatifs sont logiciels, ils sont eux-mêmes hébergés par un dispositif matériel ayant l'architecture matérielle de l'ordinateur 5, et peuvent alors s'appuyer sur les moyens matériels de l'ordinateur 5 évoqués précédemment (PROC, MEM, ROM, NVM, COM). Dans la suite de la description, par souci de simplification, on fait référence aux moyens PROC, MEM, ROM, NVM, COM du dispositif applicatif, que celui-ci soit matériel ou logiciel.

Conformément au standard 3GPP, chaque dispositif applicatif 3 hébergeant une fonction réseau NF du réseau cœur CN est configuré pour enregistrer auprès du dispositif NRF 2 son profil NFProfile. Ce profil comprend une pluralité d'attributs caractérisant l'état opérationnel de la fonction NF (ex. sa disponibilité, sa charge, depuis quand elle a démarré, etc.), ses caractéristiques (ex. son identifiant, son nom de domaine pleinement qualifié ou FQDN (pour « Fully Qualified Domain Name » en anglais), le type de fonction NF correspondant, comment elle peut être jointe, etc.), les services qu'elle offre, les ressources qu'elle gère, etc. Les attributs peuvent être définis au niveau de la fonction NF et/ou de chaque service implémenté par celle-ci. Cet enregistrement est réalisé, comme décrit dans les documents 3GPP TS 23.502 et TS 29.510 en utilisant une API du service de gestion Nnrf_NFManagement, désignée dans la suite par API_MNG. L'interface API_MNG est ici l'API standardisée « Nnrf_NFManagement API » décrite en **annexe A.2** du document 3GPP TS 29.510. Elle s'appuie sur le protocole HTTP/2 et comprend une pluralité d'opérations, parmi lesquelles les opérations RegisterNFInstance, UpdateNFInstance et DeregisterNFInstance qui peuvent être utilisées respectivement par les dispositifs applicatifs 3 pour enregistrer, mettre à jour et désenregistrer leur profil auprès du service de gestion Nnrf_NFManagement du dispositif NRF 2. L'API « Nnrf_NFManagement API » comprend également une opération Heart-Beat selon laquelle chaque fonction NF enregistrée auprès du dispositif NRF 2 doit contacter le dispositif NRF 2 périodiquement (selon une période dite de « Heart Beat ») pour lui montrer qu'elle est toujours opérationnelle ; lorsque le dispositif NRF 2 détecte qu'une fonction NF n'a pas mis à jour son profil depuis un intervalle de temps configurable supérieur à la période de Heart-Beat, il change le statut (c'est-à-dire l'état) de la fonction NF dans son profil de « Registered » (état enregistré) à « Suspended » (état suspendu).

Dans le mode de réalisation décrit ici, les profils des dispositifs applicatifs 3 hébergeant les fonctions NF1, NF2, ..., référencés par NFProfile(NF1), NFProfile(NF2), ..., sont stockés dans une couche de persistance 6 du service de gestion Nnrf_NFManagement du dispositif NRF 2, par exemple dans une base de données. Une telle couche de persistance 6 est située dans un espace mémoire de la mémoire NVM non volatile du dispositif NRF 2, et est propre au service de gestion Nnrf_NFManagement. Par couche de persistance, on entend une mémoire fiable et persistant au-delà de la fin du processus à l'origine des données (dans notre exemple de l'enregistrement des fonctions NF ou de la modification de leurs profils). Dans le mode de réalisation décrit ici, on suppose que la persistance de la couche de persistance 6 s'étend sur une longue durée, potentiellement non limitée (c'est-à-dire que les données stockées dans cette couche de persistance perdurent ou survivent dans le temps potentiellement sur une durée non bornée).

La couche de persistance 6 (et incidemment la base de données contenant les profils) est accessible en lecture et en écriture par le service de gestion Nnrf_NFManagement du dispositif NRF 2 uniquement (autrement dit, elle n'est pas directement accessible par des services autres que le service de gestion Nnrf_NFManagement). Le service de découverte Nnrf_NFDiscovery du dispositif NRF 2 peut accéder (en lecture uniquement) au contenu de la couche de persistance 6 (et plus particulièrement de la base de données contenant les profils) par l'intermédiaire du service de gestion Nnrf_NFManagement avec lequel il communique via l'interface API_MNG du service de gestion Nnrf_NFManagement. Plus spécifiquement, le service de découverte Nnrf_NFDiscovery peut accéder par l'intermédiaire de l'interface API_MNG et du service de gestion Nnrf_NFManagement à tout ou partie des attributs des profils stockés dans la couche de persistance 6 en utilisant les opérations GetNFInstances, GetNFInstance, CreateSubscription, UpdateSubscription, onNFStatusEvent, comme évoqué plus en détail ultérieurement.

Lorsqu'un dispositif applicatif 4 hébergeant une fonction NF « consumer » souhaite accéder à (i.e. consommer) un service offert par un dispositif applicatif 3 hébergeant une fonction NF « producer », conformément au standard 3GPP, le dispositif applicatif 4 sollicite le dispositif NRF 2, et plus particulièrement son service de découverte Nnrf_NFDiscovery, en lui envoyant une requête afin d'obtenir une liste de dispositifs applicatifs candidats répondant à un ou plusieurs critères de recherche. A cet effet, le dispositif applicatif 4 utilise une API, désignée ici par API_DISC, du service de découverte Nnrf_NFDiscovery. Cette API est l'API standardisée « Nnrf_NFDiscovery API » décrite en annexe A.3 du document 3GPP TS 29.510, qui s'appuie sur le protocole HTTP/2. Elle comprend notamment l'opération SearchNFInstances, qui permet au dispositif applicatif 4 d'indiquer au service de découverte Nnrf_NFDiscovery son ou ses critères de recherche (ex. type de fonction NF recherché, zone géographique, etc.). Il convient de noter que l'opération SearchNFInstances (requête au sens de l'invention) comporte deux paramètres d'entrée obligatoires, à savoir le type *target-nf-type* de la fonction NF recherchée (fonction réseau « producer ») et le type *requester-nf-type* de la fonction NF à l'origine de la requête (fonction NF implémentée par le dispositif applicatif 4). D'autres paramètres d'entrée optionnels peuvent être ajoutés pour préciser davantage de critères de recherche et permettre ainsi au service de découverte Nnrf_NFDiscovery d'affiner le filtrage des fonctions NF « producer » candidates à fournir au dispositif applicatif 4 en réponse à sa requête.

Dans le mode de réalisation décrit ici, les différents services implémentés par le dispositif NRF 2, et en particulier les services de gestion Nnrf_NFManagement et de découverte Nnrf_NFDiscovery du dispositif NRF 2 sont implémentés sous la forme de micro-services. Le micro-service implémentant le service de gestion Nnrf_NFManagement est désigné ici par MS_MNG, tandis que le micro-service implémentant le service de découverte Nnrf_NFDiscovery est désigné par MS_DISC. Le micro-service MS_MNG, et *a fortiori* le support sur lequel est enregistré ce micro-service MS_MNG (typiquement un espace mémoire de la mémoire non volatile NVM du dispositif applicatif NRF 2), sont chacun des entités configurées pour mettre en œuvre le service de gestion Nnrf_NFManagement du dispositif NRF 2. Le micro-service MS_DISC, et *a fortiori* le support sur lequel est enregistré ce micro-service MS_DISC (typiquement un espace mémoire de la mémoire non volatile NVM du dispositif applicatif NRF 2), sont chacun des entités configurées pour mettre en œuvre le service de découverte Nnrf_NFDiscovery du dispositif NRF 2, conformes à l'invention.

Dans la suite de la description, seuls les modules du micro-service MS_DISC sont décrits en détail ; il est toutefois évident pour l'homme du métier que le support sur lequel est enregistré le micro-service MS_DISC dispose des mêmes modules, et donc ce qui caractérise le micro-service MS_DISC caractérise également le support sur lequel il est enregistré. Par ailleurs, les services de gestion Nnrf_NFManagement et de découverte Nnrf_NFDiscovery étant implémentés sous la forme des micro-services MS_MNG et MS_DISC, il est considéré dans la suite comme équivalent de faire référence au service de gestion Nnrf_NFManagement, respectivement au service de découverte Nnrf_NFDis-covery, et au micro-service MS_MNG, respectivement au micro-service MS_DISC.

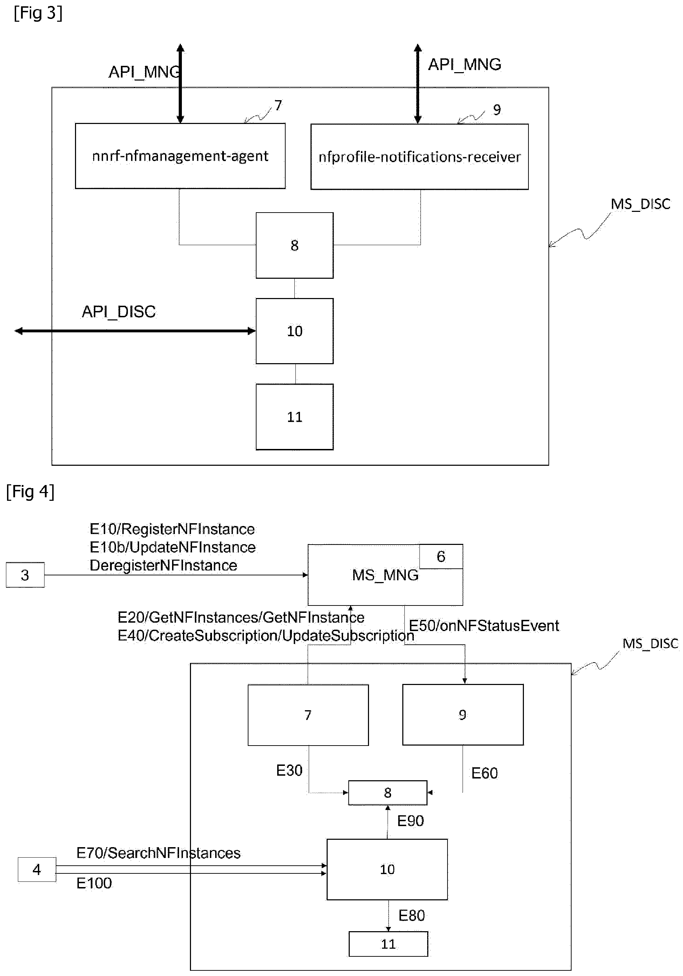

Conformément à l'invention et comme illustré sur la **figure 3****,** le micro-service MS_DISC comprend, sous la forme d'instructions de programme d'ordinateur exécutable par le processeur PROC du dispositif NRF 2, les modules logiciels suivants :
- un module 7 de gestion (aussi désigné ici par *nnrf-nfmanagement-agent*) configuré pour obtenir via l'interface API_MNG du micro-service MS_MNG du dispositif NRF 2, des données gérées par le micro-service MS_MNG, relatives à au moins une fonction NF « producer » NF1, NF2, ... du réseau cœur CN et contenues dans la couche de persistance 6. Le module 7 de gestion est configuré pour mémoriser les données obtenues dans un cache 8 dit primaire (ou « backend »), propre au micro-service MS_DISC, et accessible que par ce dernier. Le cache primaire 8 est ici un cache volatile, initialement vide au démarrage du dispositif NRF 2, qui se caractérise par une faible latence et un débit élevé, autrement dit par sa rapidité d'exécution et d'accès, notamment par rapport à la couche de persistance 6 du micro-service MS_MNG. Il convient de noter que, dans le mode de réalisation décrit ici, on privilégie surtout pour le choix du cache 8 sa rapidité d'accès (c'est-à-dire sa faible ou très faible latence) et sa bande passante élevée (versus une éventuelle persistance comme pour la couche de persistance 6) ;
- un module 9 de mise à jour (aussi désigné ici par *nfprofile-notifications-receiver)* configuré pour, suite à une modification d'une des données gérées par le micro-service MS_MNG et contenues dans la couche de persistance 6, mettre à jour le cache primaire 8 pour refléter cette modification. Le module 9 de mise à jour utilise, pour être informé des modifications des données gérées par le micro-service MS_MNG, l'interface API_MNG, comme détaillé davantage ultérieurement ; et
- un module 10 de traitement, configuré pour accéder en lecture seulement au cache primaire 8 et utiliser au moins les données mémorisées dans le cache primaire 8 lorsque le micro-service MS_DISC est sollicité pour exécuter une opération du service Nnrf_NFDiscovery. Ainsi l'exécution de l'opération en question se fait sans adhérence avec la couche de persistance 6 du micro-service MS_MNG. Une telle opération est par exemple la réception d'un dispositif applicatif 4 implémentant une fonction NF « consumer » d'une requête de découverte SearchNFInstances, l'élaboration d'une réponse à cette requête de découverte en interrogeant le cache primaire 8 et la fourniture de la réponse au dispositif applicatif 4 à l'origine de la requête.

Dans le mode de réalisation décrit ici, les données obtenues du micro-service MS_MNG et mémorisées par le module 7 de gestion sont des attributs des profils NFProfile des fonctions NF « producer » NF1, NF2, ..., gérées par le micro-service MS_MNG du dispositif NRF 2. Le module 7 de gestion peut être configuré pour obtenir l'intégralité de chaque profil NFProfile contenu dans la couche de persistance 6 du micro-service MS_MNG ou seulement une partie d'entre eux (i.e. certains attributs seulement).

La **figure 4** illustre notamment les relations entre les différents éléments du système 1. Nous allons en référence à cette figure, détailler le fonctionnement des modules du micro-service MS_DISC et les étapes du procédé d'exécution selon l'invention telles que mises en œuvre par ces modules. Comme mentionné précédemment, dans le mode de réalisation décrit ici, le micro-service MS_DISC et les éléments du système 1 communiquent en utilisant les opérations d'API (API_MNG et API_DISC) standardisées, et décrites en annexes A.2 et A.3 du document 3GPP TS 29.510. L'homme du métier est invité à se référer à ces annexes pour une description détaillée de ces opérations et des API en question.

Comme évoqué précédemment, on suppose ici que les dispositifs applicatifs 3 hébergeant des fonctions NF « producer » NF1, NF2, ... ont enregistré leurs profils NFProfile respectifs auprès du dispositif NRF 2, via l'interface API_MNG du micro-service MS_MNG, et notamment l'opération *RegisterNFInstance* (étape E10). Ces profils sont stockés dans la couche de persistance 6 du micro-service MS_MNG, dans la base de données évoquée précédemment. Ils peuvent être mis à jour par les dispositifs applicatifs 3, en cas de modification d'un ou de plusieurs attributs en utilisant l'opération *UpdateNFInstance* de l'interface MS_MNG, ou être supprimés, par exemple en cas d'extinction d'une instance de fonction NF, au moyen de l'opération *DeregisterNFInstance* (étape E10b). Comme évoqué précédemment, le dispositif NRF 2, et plus particulièrement le micro-service MS_MNG, peut également mettre à jour un profil d'un dispositif applicatif 3 pour basculer son état de « Registered » à « Suspended » en cas d'inactivité de la fonction NF hébergée par ce dispositif applicatif 3.

Au démarrage du dispositif NRF 2, le cache primaire 8 volatile du micro-service MS_DISC est vide. Le module 7 de gestion du micro-service MS_DISC est chargé d'initialiser le cache primaire 8 et de mettre en place le processus de mise à jour du cache primaire 8 par le module 9 de mise à jour.

Plus particulièrement, le module 7 de gestion copie dans un premier temps ici tous les profils NFProfile des fonctions NF NF1, NF2, ..., contenus dans la couche de persistance 6 du micro-service MS_MNG (étape E20). Il utilise à cet effet les opérations *GetNFInstances* et *GetNFInstance* de l'interface API_MNG. L'opération *GetNFInstances* permet au module 7 de gestion d'interroger le micro-service MS_MNG pour obtenir la liste des identifiants (des URI ici pour « Uniform Resource Identifier » en anglais) des profils de fonctions NF contenus dans la couche de persistance 6 du micro-service MS_MNG. Pour chaque URI de la liste d'URI obtenue du micro-service MS_MNG, le module 7 de gestion envoie une requête au micro-service MS_MNG, en utilisant l'opération *GetNFInstance* afin d'obtenir le profil NFProfile de la fonction NF associée géré par le micro-service MS_MNG et stocké dans la couche de persistance 6. Cette opération peut être réalisée en parallèle pour les différentes URI de la liste d'URI obtenue pour des raisons de performance.

Les profils de fonctions NF ainsi obtenus par le module 7 de gestion sont alors mémorisés par ce dernier dans le cache primaire 8 (étape E30).

Dans le même temps, le module 7 de gestion souscrit auprès du micro-service MS_MNG à la notification du module 9 de mise à jour de toute modification (création de profils, mise à jour d'attributs, suspension de fonction NF ou suppression de profils) affectant les profils de fonctions NF gérés par le micro-service MS_MNG (étape E40).

En variante, il peut limiter la notification à certains événements particuliers, par exemple aux modifications de certains attributs seulement des profils, typiquement lorsque le module 7 de gestion n'a répliqué qu'une partie des profils dans le cache primaire 8, aux attributs qu'il a répliqués ou souhaite répliquer.

Lorsque la souscription a une durée limitée, le module 7 de gestion est configuré pour prolonger cette durée de validité de sorte à maintenir la souscription active.

Cette souscription utilise l'opération *CreateSubscription* de l'interface API_MNG. Elle peut être mise à jour à tout moment par le module 7 de gestion, au moyen de l'opération *UpdateSubscription* de l'interface API_MNG. Plus particulièrement, le module 7 de gestion réalise ici une souscription par type de fonction NF (attribut *subscrCond=NFType-Cond),* pour chaque type de fonction NF existant (la liste des types de fonctions NF étant connue et finie). A titre illustratif, dans le contexte du standard 3GPP, une telle liste est notamment fournie dans le document TS 29.510 cité précédemment et inclut des fonctions NF définies par le standard 3GPP de même que des fonctions NF non définies par le standard 3GPP dites « custom NF type »). Le module 7 de gestion indique en outre comme destinataire des notifications (« endpoint » en anglais) dans l'attribut *nfStatusNotificationUri* de l'opération *CreateSubscription,* l'URI du module 9 de mise à jour, qui est configuré pour traiter les notifications. De cette sorte, le module 7 de gestion s'assure d'être informé de la mise à jour de tous les profils de fonctions NF. Il convient de noter que cet URI peut être unique ou varier par exemple selon le type de la fonction NF précisé dans la souscription (en d'autres mots, on peut envisager plusieurs instances du module 9 de mise à jour, chacune ayant son propre « endpoint » et étant associée à un ou plusieurs types de fonctions NF), par exemple dans un souci de répartition de la charge de traitement des notifications.

Ainsi, toute modification affectant un profil géré par le micro-service MS_MNG correspondant à la souscription faite par le module 7 de gestion du micro-service MS_DISC est notifiée au module 9 de mise à jour, par l'intermédiaire de l'interface API_MNG et plus particulièrement de l'opération *onNFStatusEvent* (étape E50). Une telle modification peut consister en la création d'un nouveau profil, en la modification d'un ou de plusieurs profils existants, mémorisés dans la couche de persistance 6 du micro-service MS_MNG, en la modification du statut d'une fonction NF dans un profil existant (passage de l'état « Registered » à l'état « Suspended ») ou en la suppression d'un profil existant. Il convient de noter que la fréquence de mise à jour du profil d'une fonction NF peut être aléatoire ou liée à des processus automatiques répondant à une logique prédictive et modélisable.

Lorsqu'une notification porte sur une mise à jour d'un profil existant, elle peut prendre ici plusieurs formats : selon un premier format, le profil en question est transmis dans son intégralité au module 9 de mise à jour (ou pour le moins, tous les attributs du profil auxquels le module 7 de gestion a souscrit) ; selon un second format, une série d'opérations de transformation appliquées à la valeur précédente du profil et reflétant les modifications apportées à ce dernier est transmise dans la notification.

Ainsi, sur réception d'une notification selon le premier format, le module 9 de mise à jour met à jour le profil (ou la portion de profil) mémorisé dans le cache primaire 8 avec le profil (ou la portion de profil) modifié contenu dans la notification ; par exemple, il extrait le profil (ou la portion de profil) contenu dans la notification et le copie dans le cache primaire 8 en remplacement de celui qui est stocké. Selon une variante, seuls les attributs ayant été modifiés sont extraits de la notification et copiés dans le cache primaire 8 en remplacement des valeurs stockées du profil en question.

Sur réception d'une notification selon le second format, le module 9 de mise à jour lit le profil correspondant dans le cache primaire 8, applique la série d'opérations de transformation transmise dans la notification aux attributs du profil pour refléter les modifications apportées à ces attributs au niveau du profil géré par le micro-service MS_MNG, et copie le profil modifié ainsi obtenu à la place de celui stocké dans le cache primaire 8.

On note que dans le mode de réalisation décrit ici, si la notification porte sur un profil qui n'est pas présent dans le cache primaire 8, le module 9 de gestion récupère le profil complet (ou la portion du profil qui l'intéresse) en utilisant l'opération GetNFInstance de l'interface API_MNG.

Le choix de l'un ou l'autre des formats de notification dépend du mode de fonctionnement du dispositif NRF 2. Ce mode de fonctionnement peut résulter d'une configuration statique (par l'opérateur du réseau) ou varier dans le temps et/ou être choisi par le dispositif NRF 2 lui-même (par exemple si on considère un grand nombre d'opérations de transformation, il peut être pertinent pour des raisons de complexité et de rapidité d'exécution de transmettre le profil complet plutôt que les opérations de transformation).

A l'issue de la mise à jour du cache primaire 8 du micro-service MS_DISC (étape E60), le contenu du cache primaire 8 reflète fidèlement le contenu de la couche de persistance 6 du micro-service MS_MNG, autrement dit, le cache primaire 8 et la couche de persistance 6 sont synchronisés. On peut toutefois envisager que ponctuellement, le module 7 de gestion déclenche une vérification d'une concordance entre les deux contenus. Cette vérification peut être exécutée directement par le module 7 de gestion ou être confiée à un module d'audit externe, et s'appuyer sur des mécanismes de synchronisation connus de l'homme du métier et non décrits en détail ici (ex. vérification du nombre de profils, des types de profils, etc. via des mécanismes de type « checksum » ou CRC (pour « Cyclic Redundancy Check » en anglais)).

Ainsi les étapes E10 à E60 qui viennent d'être décrites permettent au module 7 de gestion de provisionner le cache primaire 8 et de maintenir son contenu à jour par rapport au contenu de la couche persistance 6 du micro-service MS_MNG. Elles permettent, en un laps de temps très court, de faire en sorte que le cache primaire 8 contienne tous les profils (ou portions de profil qui intéressent le micro-service MS_DISC) de fonctions NF gérés par le micro-service MS_MNG, afin que le micro-service MS_DISC soit pleinement opérationnel pour gérer les opérations qu'il est en charge d'exécuter et que les réponses qu'il apporte soient cohérentes avec les profils de fonctions NF gérés par le micro-service MS_MNG. Il convient de noter que le temps pour initialiser le cache primaire 8 dépend également de la capacité du micro-service MS_MNG à traiter des rafales (ou « bursts » en anglais) de requêtes GetNFInstance dans un intervalle de temps très court.

Nous allons maintenant détailler l'exécution d'une opération dont le micro-service MS_DISC a la charge, et plus particulièrement le traitement, par son module 10 de traitement, d'une requête de découverte reçue d'un dispositif applicatif 4 hébergeant une fonction NF « consumer » (étape E70). Cette requête de découverte est envoyée par le dispositif applicatif 4 au module 10 de traitement du micro-service MS_DISC par l'intermédiaire de l'interface API_DISC ; elle s'appuie sur l'opération *SearchNFInstances,* paramétrée avec les critères de recherche souhaités par le dispositif applicatif 4. Comme indiqué précédemment, l'opération *SearchNFInstances* comprend deux paramètres d'entrée obligatoires (type de la fonction réseau « consumer » et type de la fonction réseau « producer » recherché), et peut comprendre par ailleurs une pluralité de paramètres d'entrée optionnels représentant des critères de recherche additionnels spécifiés par le dispositif applicatif 4.

Dans le mode de réalisation décrit ici, suite à la réception de la requête de découverte *SearchNFInstances,* le module 10 de traitement du micro-service MS_DISC consulte un cache secondaire 11 (ou « frontend ») du micro-service MS_DISC (étape E80). Ce cache secondaire 11 est alimenté par le module 10 de traitement à chaque requête qui lui est adressée, si tant est qu'il s'agit d'une nouvelle requête (i.e. nouveaux paramètres) qui ne correspond pas à une requête déjà traitée par le module 10 de traitement dans une période de temps déterminée (correspondant à la durée de validité des réponses faites par le module 10 de traitement). Le module 10 de traitement mémorise ainsi dans le cache secondaire 11 chaque réponse adressée à un dispositif applicatif 4 lui ayant formulé une requête de découverte, en association avec les paramètres d'entrée de cette requête. Chaque entrée du cache secondaire 11 a une durée de vie égale à la durée de validité de la réponse correspondante. Ainsi, à chaque nouvelle requête reçue, le module 10 de traitement est configuré ici pour consulter systématiquement son cache secondaire 11 pour identifier si une requête similaire ou identique a déjà été traitée et si une réponse valide (c'est-à-dire dont la durée de validité n'est pas expirée) existe le cas échéant. Le cas échéant, il extrait la réponse qui a été faite à cette requête du cache secondaire 11, met à jour les entêtes HTTP de la réponse et la durée de validité de la réponse, et l'envoie au dispositif applicatif 4 (étape E100). Le recours au cache secondaire 11 permet de réduire le temps de réponse du micro-service MS_DISC et en particulier de son module 10 de traitement, puisque les traitements internes nécessaires à l'élaboration d'une réponse à une requête ne sont pas répétés pour toute opération *SearchNFInstances* identique ou similaire reçue dans un intervalle de temps correspondant à la durée de validité de la réponse.

Si la requête de découverte correspond à une requête qui n'a pas déjà été traitée par le module 10 de traitement ou si elle n'est pas reçue dans l'intervalle de temps correspondant à la durée de validité d'une réponse faite à une requête similaire ou identique, le module 10 de traitement interroge le cache primaire 8 pour élaborer une réponse à cette requête (étape E90). Plus spécifiquement, à partir des paramètres d'entrée de la requête *SearchNFInstances* qu'il a reçue, il identifie parmi les profils des fonctions NF (ou portions de profils) mémorisés dans le cache primaire 8, les fonctions NF dites candidates répondant à ces paramètres d'entrée et ainsi aux critères de recherche formulés par le dispositif applicatif 4. Il retourne alors les profils (ou portions de profils obtenus ou attributs des profils requis dans la réponse) des fonctions NF candidates extraits du cache primaire 8, dans une réponse à la requête *SearchNFInstances,* via son interface API_DISC (étape E100).

Dans chaque réponse faite à la requête *SearchNFInstances* (extraite du cache secondaire 11 ou nouvelle réponse élaborée en interrogeant le cache primaire 8), le module 10 de traitement inclut une durée de validité dans l'attribut *validityPeriod* de la réponse (ainsi que dans l'entête Cache-Control de la réponse). Cette durée de validité peut avoir une valeur fixe (par exemple configurée par l'opérateur du réseau, et choisie identique pour toutes les réponses ou par type de fonctions NF, etc.) ou être déterminée de façon dynamique. Si elle est choisie trop courte, le dispositif applicatif 4 à l'origine de la requête peut être amené à solliciter souvent, voire de façon excessive, le micro-service MS_DISC bien que les profils des fonctions NF qui lui sont fournis en réponse n'ont pas changé par rapport à sa précédente requête. *A contrario,* si cette valeur est choisie trop grande, une partie ou tous les profils de fonctions NF se trouvant dans le cache secondaire 11 ne seront plus à jour ce qui pourrait entrainer des dysfonctionnements ou un déséquilibre dans l'interfonctionnement des fonctions NF au sein du réseau cœur CN (ex. surcharge d'une fonction NF au détriment d'une autre (mauvais équilibrage ou contrôle de charge), sollicitation d'une fonction NF indisponible ou suspendue voire désen-registrée, etc.). La durée de validité doit donc être choisie de sorte à prendre en compte ces aspects.

La durée de validité indiquée dans une réponse s'applique à tous les profils de fonctions NF fournis dans cette réponse. Dans un mode particulier de réalisation, on peut envisager pour la fixer de tenir compte de la durée de validité du profil de fonction NF qui est amené à changer dans l'intervalle de temps le plus court parmi tous les profils de fonctions NF fournis dans la réponse, mais également, plus largement de prendre en compte la dynamicité du réseau cœur 5G (enregistrement de nouvelles fonctions NF, désenre-gistrement de fonctions NF).

Grâce à l'invention, le micro-service de découverte MS_DISC dispose de la fréquence de mise à jour de chaque profil de fonction NF via les notifications reçues par le module 9 de mise à jour pour chacun d'eux. Il est possible à partir de ces fréquences de mise à jour au module 10 de traitement de déduire une durée de validité plus ou moins prédictive pour chaque profil de fonction NF (correspondant à la fréquence de mise à jour du profil) et d'utiliser cette information pour déterminer une durée de validité d'une réponse fournie à une requête.

Dans une variante de réalisation, une durée de validité (ou de façon équivalente, une information de fin de validité) peut être ajoutée dans la réponse pour chaque profil de fonction NF fournie dans la réponse, par exemple dans un attribut propriétaire (ou « vendor attribut » en anglais).

Il convient de noter que du fait de l'incertitude et la variabilité importante des fréquences de mise à jour dont dispose le micro-service MS_DISC, il existe une incertitude sur les durées de validité déterminées à partir de ces fréquences de mise à jour ; pour tenir compte de cette incertitude, le micro-service MS_DISC du dispositif NRF 2 (par exemple via son module 10 de traitement) peut, dans un mode particulier de réalisation, attribuer dans le cache primaire 8 un niveau de priorité plus faible (par exemple dans l'attribut « priority » du profil) à un profil de fonction NF associé à une durée de validité présentant une forte incertitude (c'est-à-dire faible ou correspondant à une fréquence de mise à jour grande et pour lequel on n'est pas en mesure de dire si sa durée de validité est supérieure à la durée de validité de la réponse faite à la requête. D'autres facteurs peuvent être pris en compte pour attribuer un niveau de priorité à un profil de fonction NF (ou de façon équivalente à une fonction NF ou une instance de fonction NF donnée), comme par exemple le fait que son état bascule d'un état enregistré à un état suspendu et qu'elle perdure dans cet état. Le niveau de priorité alloué à un profil peut être avantageusement fourni dans la réponse envoyée au dispositif applicatif 4 ou être exploité par le module 10 de traitement pour déterminer les profils à insérer dans cette réponse (il peut par exemple ne pas sélectionner les profils associés aux niveaux de priorité les plus faibles).

Ainsi, au lieu d'interroger à plusieurs reprises et systématiquement la couche de persistance 6 du micro-service MS_MNG pour chaque requête de découverte reçue par le micro-service MS_DISC, l'invention permet au micro-service MS_DISC de n'interroger qu'une seule fois son cache primaire 8 et/ou son cache secondaire 11. Par ailleurs, le choix d'un cache primaire 8 présentant une faible latence et un débit élevé permet de réduire le temps de traitement d'une requête de découverte.

A titre illustratif, si on considère un million d'opérations *SearchNFInstances* adressées par des dispositifs applicatifs du réseau cœur CN au micro-service DISC du dispositif NRF 2 via l'interface API_DISC, et un gain d'1 ms par requête en utilisant le cache primaire 8, il en résulte un gain apporté par l'invention de 16mn et 40s par million de requêtes *SearchNFInstances* traitées moyennant l'ajout d'un cache primaire. Une fois ce cache primaire initialisé, le micro-service MS_MNG n'est plus sollicité en dehors de l'envoi des notifications de mise à jour des profils de fonctions NF au module 9 de mise à jour du micro-service MS_DISC, ce qui représente une charge négligeable pour le micro-service MS_MNG par rapport à d'autres opérations exécutées par ce dernier, comme par exemple la gestion des profils de fonctions NF. *A contrario,* en l'absence de cache primaire, comme évoqué précédemment, le micro-service MS_MNG doit être sollicité au rythme des opérations *SearchNFInstances* demandées au micro-service MS_DISC. Cela a des conséquences sur la consommation de ressources du micro-service MNG et peut avoir un impact sur ses performances pour traiter les opérations de gestion de profils de fonctions NF.

L'invention permet donc d'optimiser les performances de chacun des micro-services MS_MNG et MS_DISC du dispositif NRF 2.

Par ailleurs, comme souligné précédemment, l'invention permet avantageusement au micro-service MS_DISC de rester opérationnel en cas de défaillance ou d'indisponibilité du micro-service MS_MNG et notamment de sa couche de persistance 6, en raison de l'absence d'adhérence entre le micro-service MS_DISC et la couche de persistance 6.

Il convient de noter que l'invention a été présentée dans le contexte d'un réseau cœur 5G, de dispositifs applicatifs hébergeant des fonctions NF, d'un premier et un deuxième services implémentés par une même fonction NF (par une fonction NRF plus particulièrement) et d'une architecture de micro-services adoptée pour le dispositif NRF gérant les profils des fonctions NF. Ces hypothèses ne sont toutefois pas limitatives en soi, et l'invention peut s'appliquer dans d'autres contextes comme évoqué précédemment. Notamment, elle peut s'appliquer à toute architecture informatique où un service S gère des données selon une organisation optimisée pour répondre à diverses contraintes qui lui sont propres, et offre via une API des opérations permettant à d'autres services (implémentés ou non par le même dispositif applicatif qui implémente le service S) de répliquer et de maintenir à jour de façon non intrusive des données gérées par le service S avec pour objectif de les organiser selon leurs propres contraintes. Grâce à l'invention, le service S n'est pas sollicité par les opérations mises en œuvre par les autres services, mais uniquement pour l'initialisation et la mise à jour des données de chacun des autres services. Ainsi la charge d'un service tiers n'affecte pas la charge du service S à l'origine des données.

## Revendications

1. Entité (MS_DISC) configurée pour mettre en œuvre un premier service implémenté par un premier dispositif applicatif (2) d'un réseau (CN) de communications, ladite entité comprenant :
- un module (7) de gestion configuré pour obtenir via une interface de programmation applicative (API_MNG) d'un deuxième service (MS_MNG) implémenté dans le réseau par ledit premier dispositif, des données relatives à au moins un deuxième dispositif applicatif du réseau, gérées par le deuxième service et mémorisées dans une couche (6) de persistance du deuxième service accessible via ladite interface de programmation, ledit module de gestion étant configuré pour mémoriser lesdites données obtenues dans un cache (8) dit primaire de l'entité ;
- un module (9) de mise à jour configuré pour, suite à une modification d'une dite donnée gérée par ledit deuxième service, mettre à jour le cache primaire pour refléter ladite modification en utilisant ladite interface de programmation ; et
- un module (10) de traitement, configuré pour utiliser au moins une dite donnée du cache primaire lors d'une exécution d'au moins une opération du premier service comprenant une réception d'une requête d'un troisième dispositif applicatif (4) du réseau relative à au moins un dit deuxième dispositif applicatif et une fourniture en réponse à ladite requête de données relatives audit au moins un deuxième dispositif applicatif extraites du cache primaire.

2. Entité (MS_DISC) selon la revendication 1 dans laquelle le module (10) de traitement est configuré pour mémoriser dans un cache (11) dit secondaire de l'entité lesdites données fournies en réponse à la requête du troisième dispositif applicatif et pour fournir en réponse à une requête ultérieure similaire ou identique, tout ou partie desdites données mémorisées dans le cache secondaire.

3. Entité (MS_DISC) selon l'une quelconque des revendications 1 ou 2 configurée pour fournir avec lesdites données relatives audit au moins un deuxième dispositif applicatif un niveau de priorité attribué audit au moins un deuxième dispositif applicatif et/ou une durée de validité desdites données déterminé(e)(s) en fonction d'une fréquence de mise à jour des données relatives audit au moins un deuxième dispositif applicatif déterminée par le module (9) de mise à jour.

4. Entité (MS_DISC) selon l'une quelconque des revendications 1 à 3 dans laquelle le module (7) de gestion est configuré pour souscrire auprès du deuxième service, via ladite interface de programmation, à une notification du module (9) de mise à jour des modifications affectant desdites données gérées par le deuxième service relatives à au moins un dit deuxième dispositif applicatif.

5. Entité (MS_DISC) selon la revendication 4 dans laquelle lorsque ladite souscription auprès du deuxième service est réalisée pour une durée limitée, le module de gestion est configuré pour prolonger ladite durée limitée afin de maintenir active ladite souscription.

6. Entité (MS_DISC) selon l'une quelconque des revendications 1 à 5 dans laquelle ledit au moins un deuxième dispositif applicatif (3) héberge une fonction réseau et lesdites données gérées par le deuxième service relatives à un dit deuxième dispositif applicatif comprennent des attributs d'un profil de ce deuxième dispositif applicatif.

7. Entité (MS_DISC) selon la revendication 6 dans laquelle le module (9) de mise à jour est configuré pour, suite à une réception en provenance du deuxième service d'une notification comprenant au moins un attribut d'un profil d'un dit deuxième dispositif applicatif ayant été modifié, mettre à jour le cache primaire avec ledit au moins un attribut modifié du profil contenu dans la notification.

8. Entité (MS_DISC) selon la revendication 5 ou 6 dans laquelle le module (9) de mise à jour est configuré pour, suite à une réception en provenance du deuxième service d'une notification comprenant au moins une opération de transformation reflétant une modification d'au moins un attribut d'un profil d'un dit deuxième dispositif applicatif géré par le deuxième service, appliquer ladite au moins une opération de transformation audit au moins un attribut correspondant mémorisé dans le cache primaire pour le mettre à jour.

9. Entité (MS_DISC) selon l'une quelconque des revendications 6 à 8 dans lequel le module de gestion est configuré pour, via ladite interface de programmation :
- interroger le deuxième service pour obtenir une liste d'identifiants de profils gérés par le deuxième service ;
- envoyer une requête pour chaque identifiant de ladite liste pour obtenir le profil correspondant géré par le deuxième service ; et
- mémoriser les profils obtenus dans le cache primaire.

10. Entité (MS_DISC) selon l'une quelconque des revendications 1 à 9 dans laquelle ledit module (7) de gestion est configuré pour déclencher une vérification d'une concordance entre les données gérées par le deuxième service et les données présentes dans le cache primaire à un instant donné.

11. Dispositif applicatif (2) d'un réseau de communications (CN), dit premier dispositif applicatif, comprenant :
- une première entité (MS_DISC) selon l'une quelconque des revendications 1 à 10 configurée pour mettre en œuvre un premier service ; et
- une deuxième entité (MS_MNG) configurée pour mettre en œuvre le deuxième service gérant des données relatives audit au moins un deuxième dispositif applicatif du réseau.

12. Dispositif selon la revendication 11 ayant une architecture de micro-services, la première entité et la deuxième entité correspondant à des micro-services distincts (MS_DISC,MS_MNG) dudit dispositif.

13. Procédé d'exécution d'au moins une opération d'un service par une entité (MS_DISC) d'un premier dispositif applicatif (2) d'un réseau de communications (CN), ledit procédé comprenant :
- une étape (E20) d'obtention, via une interface de programmation applicative (API_MNG) d'un deuxième service (MS_MNG) implémenté dans le réseau par le premier dispositif applicatif, de données relatives à au moins un deuxième dispositif applicatif du réseau, gérées par ledit deuxième service et mémorisées dans une couche (6) de persistance du deuxième service accessible via ladite interface de programmation;
- une étape (E30) de mémorisation desdites données obtenues dans un cache dit primaire de ladite entité ;
- suite à une modification (E50) d'au moins une dite donnée gérée par ledit deuxième service, une étape (E60) de mise à jour du cache primaire reflétant ladite modification en utilisant ladite interface de programmation ; et
- une étape (E70, E80, E90, E100) d'exécution d'au moins une opération du premier service en utilisant au moins une dite donnée du cache primaire comprenant une réception d'une requête d'un troisième dispositif applicatif (4) du réseau relative à au moins un dit deuxième dispositif applicatif et une fourniture en réponse à ladite requête de données relatives audit au moins un deuxième dispositif applicatif extraites du cache primaire.

14. Système (1) d'un réseau de communication (CN) comprenant :
- au moins un premier dispositif applicatif (2) du réseau selon la revendication 11 ou 12 implémentant un premier service et un deuxième service ;
- au moins un deuxième dispositif applicatif (3) du réseau configuré pour enregistrer des données le concernant auprès du deuxième service du premier dispositif applicatif ; et
- au moins un troisième dispositif applicatif (4) du réseau configuré pour envoyer au premier service du premier dispositif applicatif une requête relative à au moins un dit deuxième dispositif applicatif.

15. Système (1) selon la revendication 14 dans lequel lesdits au moins un premier, deuxième et troisième dispositifs applicatifs hébergent des fonctions réseau, la fonction réseau hébergée par le premier dispositif applicatif gérant des profils desdits deuxièmes dispositifs applicatifs.

## Patentansprüche

1. Entität (MS_DISC), die dazu ausgelegt ist, einen ersten Dienst auszuführen, der von einer ersten Anwendungsvorrichtung (2) eines Kommunikationsnetzwerks (CN) implementiert wird, wobei die Entität umfasst:
- ein Verwaltungsmodul (7), das dazu ausgelegt ist, über eine Anwendungsprogrammierschnittstelle (API_MNG) eines zweiten Dienstes (MS_MNG), der in dem Netzwerk von der ersten Vorrichtung implementiert wird, Daten bezüglich mindestens einer zweiten Anwendungsvorrichtung des Netzwerks zu erhalten, die von dem zweiten Dienst verwaltet werden und in einer Persistenzschicht (6) des zweiten Dienstes gespeichert sind, auf die über die Programmierschnittstelle zugegriffen werden kann, wobei das Verwaltungsmodul dazu ausgelegt ist, die erhaltenen Daten in einem sogenannten primären Cache (8) der Entität zu speichern;
- ein Aktualisierungsmodul (9), das dazu ausgelegt ist, nach einer Änderung eines von dem zweiten Dienst verwalteten Datums den primären Cache zu aktualisieren, um die Änderung widerzuspiegeln, wobei die Programmierschnittstelle verwendet wird; und
- ein Verarbeitungsmodul (10), das dazu ausgelegt ist, mindestens ein Datum des primären Cache bei einer Ausführung mindestens einer Operation des ersten Dienstes zu verwenden, umfassend ein Empfangen einer Anforderung einer dritten Anwendungsvorrichtung (4) des Netzwerks bezüglich mindestens einer zweiten Anwendungsvorrichtungen und ein Bereitstellen, als Antwort auf die Anforderung, von Daten bezüglich der mindestens einen zweiten Anwendungsvorrichtung, die aus dem primären Cache extrahiert werden.

2. Entität (MS_DISC) nach Anspruch 1, wobei das Verarbeitungsmodul (10) dazu ausgelegt ist, in einem sogenannten sekundären Cache (11) der Entität die als Antwort auf die Anforderung der dritten Anwendungsvorrichtung bereitgestellten Daten zu speichern und als Antwort auf eine ähnliche oder identische spätere Anforderung alle oder einen Teil der in dem sekundären Cache gespeicherten Daten bereitzustellen.

3. Entität (MS_DISC) nach einem der Ansprüche 1 oder 2, die dazu ausgelegt ist, mit den Daten bezüglich der mindestens einen zweiten Anwendungsvorrichtung eine der mindestens einen zweiten Anwendungsvorrichtung zugewiesene Prioritätsstufe und/oder eine Gültigkeitsdauer der Daten bereitzustellen, die in Abhängigkeit von einer durch das Aktualisierungsmodul (9) bestimmten Aktualisierungshäufigkeit der Daten bezüglich der mindestens einen zweiten Anwendungsvorrichtung bestimmt wird(werden).

4. Entität (MS_DISC) nach einem der Ansprüche 1 bis 3, wobei das Verwaltungsmodul (7) dazu ausgelegt ist, bei dem zweiten Dienst über die Programmierschnittstelle eine Benachrichtigung des Aktualisierungsmoduls (9) über Änderungen zu abonnieren, die die von dem zweiten Dienst verwalteten Daten bezüglich mindestens einer zweiten Anwendungsvorrichtung betreffen.

5. Entität (MS_DISC) nach Anspruch 4, wobei, wenn das Abonnement bei dem zweiten Dienst für eine begrenzte Dauer ausgeführt wird, das Verwaltungsmodul dazu ausgelegt ist, die begrenzte Dauer zu verlängern, um das Abonnement aktiv zu halten.

6. Entität (MS_DISC) nach einem der Ansprüche 1 bis 5, wobei die mindestens eine zweite Anwendungsvorrichtung (3) eine Netzwerkfunktion hostet und die von dem zweiten Dienst verwalteten Daten bezüglich einer zweiten Anwendungsvorrichtung Attribute eines Profils dieser zweiten Anwendungsvorrichtung umfassen.

7. Entität (MS_DISC) nach Anspruch 6, wobei das Aktualisierungsmodul (9) dazu ausgelegt ist, nach einem Empfangen einer Benachrichtigung von dem zweiten Dienst, die mindestens ein Attribut eines Profils einer zweiten Anwendungsvorrichtung umfasst, das geändert worden ist, den primären Cache mit dem mindestens einen geänderten Attribut des Profils, das in der Benachrichtigung enthalten ist, zu aktualisieren.

8. Entität (MS_DISC) nach Anspruch 5 oder 6, wobei das Aktualisierungsmodul (9) dazu ausgelegt ist, nach einem Empfangen einer Benachrichtigung von dem zweiten Dienst, die mindestens eine Transformationsoperation umfasst, die eine Änderung mindestens eines Attributs eines Profils einer zweiten Anwendungsvorrichtung widerspiegelt, das von dem zweiten Dienst verwaltet wird, die mindestens eine Transformationsoperation auf das mindestens eine entsprechende Attribut, das in dem primären Cache gespeichert ist, anzuwenden, um es zu aktualisieren.

9. Entität (MS_DISC) nach einem der Ansprüche 6 bis 8, wobei das Verwaltungsmodul dazu ausgelegt ist, über die Programmierschnittstelle:
- den zweiten Dienst abzufragen, um eine Liste mit Kennungen von Profilen zu erhalten, die vom zweiten Dienst verwaltet werden;
- eine Anfrage für jede Kennung der Liste zu senden, um das entsprechende Profil zu erhalten, das von dem zweiten Dienst verwaltet wird; und
- die erhaltenen Profile in dem primären Cache zu speichern.

10. Entität (MS_DISC) nach einem der Ansprüche 1 bis 9, wobei das Verwaltungsmodul (7) dazu ausgelegt ist, eine Überprüfung einer Übereinstimmung zwischen den von dem zweiten Dienst verwalteten Daten und den zu einem gegebenen Zeitpunkt in dem primären Cache vorhandenen Daten auszulösen.

11. Anwendungsvorrichtung (2) eines Kommunikationsnetzwerks (CN), erste Anwendungsvorrichtung genannt, umfassend:
- eine erste Entität (MS_DISC) nach einem der Ansprüche 1 bis 10, die dazu ausgelegt ist, einen ersten Dienst auszuführen; und
- eine zweite Entität (MS_MNG), die dazu ausgelegt ist, den zweiten Dienst auszuführen, der Daten bezüglich der mindestens einen zweiten Anwendungsvorrichtung des Netzwerks verwaltet.

12. Vorrichtung nach Anspruch 11, die eine Mikrodienstarchitektur aufweist, wobei die erste Entität und die zweite Entität verschiedenen Mikrodiensten (MS_DISC, MS_MNG) der Vorrichtung entsprechen.

13. Verfahren zum Ausführen mindestens einer Operation eines Dienstes durch eine Entität (MS_DISC) einer ersten Anwendungsvorrichtung (2) eines Kommunikationsnetzwerks (CN), wobei das Verfahren umfasst:
- einen Schritt (E20) des Erhaltens, über eine Anwendungsprogrammierschnittstelle (API_MNG) eines zweiten Dienstes (MS_MNG), der in dem Netzwerk von der Anwendungsvorrichtung implementiert wird, von Daten bezüglich mindestens einer zweiten Anwendungsvorrichtung des Netzwerks, die von dem zweiten Dienst verwaltet werden und in einer Persistenzschicht (6) des zweiten Dienstes gespeichert sind, auf die über die Programmierschnittstelle zugegriffen werden kann;
- einen Schritt (E30) des Speicherns der erhaltenen Daten in einem sogenannten primären Cache der Entität;
- nach einer Änderung (E50) mindestens eines Datums, das von dem zweiten Dienst verwaltet wird, einen Schritt (E60) des Aktualisierens des primären Cache, der die Änderung widerspiegelt, unter Verwendung der Programmierschnittstelle; und
- einen Schritt (E70, E80, E90, E100) des Ausführens mindestens einer Operation des ersten Dienstes unter Verwendung mindestens eines Datums des primären Cache, umfassend ein Empfangen einer Anforderung einer dritten Anwendungsvorrichtung (4) des Netzwerks bezüglich mindestens einer zweiten Anwendungsvorrichtung und ein Bereitstellen, als Antwort auf die Anforderung, von Daten bezüglich der mindestens einen zweiten Anwendungsvorrichtung, die aus dem primären Cache extrahiert werden.

14. System (1) eines Kommunikationsnetzwerks (CN), umfassend:
- mindestens eine erste Anwendungsvorrichtung (2) des Netzwerks nach Anspruch 11 oder 12, die einen ersten Dienst und einen zweiten Dienst implementiert;
- mindestens eine zweite Anwendungsvorrichtung (3) des Netzwerks, die dazu ausgelegt ist, sie betreffende Daten bei dem zweiten Dienst der ersten Anwendungsvorrichtung zu registrieren; und
- mindestens eine dritte Anwendungsvorrichtung (4) des Netzwerks, die dazu ausgelegt ist, an den ersten Dienst der ersten Anwendungsvorrichtung eine Anforderung bezüglich mindestens einer zweiten Anwendungsvorrichtungen zu senden.

15. System (1) nach Anspruch 14, wobei die mindestens eine erste, zweite und dritte Anwendungsvorrichtung Netzwerkfunktionen hosten, wobei die von der ersten Anwendungsvorrichtung gehostete Netzwerkfunktion Profile der zweiten Anwendungsvorrichtungen verwaltet.

## Claims

1. Entity (MS_DISC) configured to implement a first service implemented by a first application device (2) of a communications network (CN), said entity comprising:
- a management module (7) configured to obtain, via an application programming interface (API_MNG) of a second service (MS_MNG) implemented in the network by said first device, data relating to at least one second application device of the network, which data are managed by the second service and stored in a persistence layer (6) of the second service accessible via said programming interface, said management module being configured to store said obtained data in a cache (8) called the primary cache of the entity;
- an update module (9) configured to, following a modification of a said datum managed by said second service, update the primary cache to reflect said modification using said programming interface; and
- a processing module (10), configured to use at least one said datum of the primary cache during execution of at least one operation of the first service comprising reception of a request from a third application device (4) of the network relating to at least one said second application device and provision in response to said request of data relating to said at least one second application device, which data are retrieved from the primary cache.

2. Entity (MS_DISC) according to Claim 1, wherein the processing module (10) is configured to store in a cache (11) called the secondary cache of the entity said data provided in response to the request of the third application device and to provide in response to a subsequent similar or identical request, all or some of said data stored in the secondary cache.

3. Entity (MS_DISC) according to either one of Claims 1 and 2 configured to provide with said data relating to said at least one second application device a priority level attributed to said at least one second application device and/or a length of time of validity of said data, said level and/or length of time being determined depending on a frequency of update of the data relating to said at least one second application device, which frequency is determined by the update module (9).

4. Entity (MS_DISC) according to any one of Claims 1 to 3, wherein the management module (7) is configured to subscribe with the second service, via said programming interface, to a notification from the update module (9) of modifications affecting said data managed by the second service relating to at least one said second application device.

5. Entity (MS_DISC) according to Claim 4, wherein when said subscription with the second service is for a limited length of time, the management module is configured to prolong said limited length of time in order to keep said subscription active.

6. Entity (MS_DISC) according to any one of Claims 1 to 5, wherein said at least one second application device (3) hosts a network function and said data managed by the second service relating to a said second application device comprise attributes of a profile of this second application device.

7. Entity (MS_DISC) according to Claim 6, wherein the update module (9) is configured, following reception from the second service of a notification containing at least one attribute of a profile of a said second application device that has been modified, to update the primary cache with said at least one modified attribute of the profile contained in the notification.

8. Entity (MS_DISC) according to Claim 5 or 6, wherein the update module (9) is configured, following reception from the second service of a notification containing at least one transformation operation reflecting a modification of at least one attribute of a profile of a said second application device managed by the second service, to apply said at least one transformation operation to said at least one corresponding attribute stored in the primary cache so as to update it.

9. Entity (MS_DISC) according to any one of Claims 6 to 8, wherein the management module is configured, via said programming interface, to:
- query the second service to obtain a list of identifiers of profiles managed by the second service;
- send a request for each identifier of said list to obtain the corresponding profile managed by the second service; and
- store the obtained profiles in the primary cache.

10. Entity (MS_DISC) according to any one of Claims 1 to 9, wherein said management module (7) is configured to trigger a verification of a match between the data managed by the second service and the data present in the primary cache at a given time.

11. Application device (2) of a communications network (CN), called the first application device, comprising:
- a first entity (MS_DISC) according to any one of Claims 1 to 10 configured to implement a first service; and
- a second entity (MS_MNG) configured to implement the second service managing data relating to said at least one second application device of the network.

12. Device according to Claim 11 having a micro-service architecture, the first entity and the second entity corresponding to separate micro-services (MS_DISC, MS_MNG) of said device.

13. Method of execution of at least one operation of a service by an entity (MS_DISC) of a first application device (2) of a communications network (CN), said method comprising:
- a step (E20) of obtaining, via an application programming interface (API_MNG) of a second service (MS_MNG) implemented in the network by the first application device, data relating to at least one second application device of the network, which data are managed by said second service and stored in a persistence layer (6) of the second service accessible via said programming interface;
- a step (E30) of storing said obtained data in a cache called the primary cache of said entity;
- following a modification (E50) of at least one said datum managed by said second service, a step (E60) of updating the primary cache to reflect said modification using said programming interface; and
- a step (E70, E80, E90, E100) of executing at least one operation of the first service using at least one said datum of the primary cache, comprising reception of a request from a third application device (4) of the network relating to at least one said second application device and provision in response to said request of data relating to said at least one second application device, which data are retrieved from the primary cache.

14. System (1) of a communication network (CN) comprising:
- at least one first application device (2) of the network according to Claim 11 or 12 implementing a first service and a second service;
- at least one second application device (3) of the network configured to record data concerning it with the second service of the first application device; and
- at least one third application device (4) of the network configured to send to the first service of the first application device a request relating to at least one said second application device.

15. System (1) according to Claim 14, wherein said at least one first, second and third application devices host network functions, the network function hosted by the first application device managing profiles of said second application devices.
